# DEMANDE DE BREVET EUROPEEN

(11) **EP 0 750 146 A1**
(43) Date de publication de la demande: **27.12.1996**
(21) Numéro de dépôt: 96401305.6
(22) Date de dépôt: 14.06.1996
(51) Int. Cl.: F16K 24/04

(54) **Dispositif de purge pour installation hydraulique**

(30) Priorité: 21.06.1995 FR 9507427
(71) Demandeur: Régie Autonome des Transports Parisiens, 75006 Paris (FR)
(72) Inventeur: Delbary Odet, 75011 Paris (FR)
(74) Mandataire: Moncheny, Michel

(57) **Abrégé**

L'invention consiste en un dispositif comprenant un corps (1) comportant une chambre d'entrée (11), une chambre de sortie (13) et une chambre intermédiaire (12) communiquant par des premier et second passages avec les chambres d'entrée et de sortie, un équipage mobile (2) comprenant un clapet (21) mobile dans la chambre d'entrée pour dégager et obturer le premier passage ainsi qu'un clapet (22) mobile dans la chambre intermédiaire pour dégager le second passage et lié au premier pour que dégagements et obturations des passages soient simultanés, un bipasse (3) reliant la chambre d'entrée et la chambre intermédiaire, et au moins un organe de rappel (4) de l'équipage mobile provoquant le dégagement des passages lorsque la pression dans la chambre d'entrée descend à une valeur inférieure à une valeur de consigne.

Le dispositif est particulièrement adapté à équiper les colonnes sèches d'intervention en cas d'incendie.

## Description

L'invention concerne un dispositif de purge pour les installations hydrauliques, destiné à être raccordé à une canalisation, et comportant un clapet amenant le dispositif à l'état ouvert lorsque la pression dans la canalisation est inférieure à une valeur de consigne et à l'état fermé lorsque la pression est supérieure à cette valeur.

Ce dispositif est plus particulièrement destiné aus "colonnes sèches" d'intervention en cas d'incendie.

En effet, notamment sur les sites enterrés (tunnels ferroviaires par exemple de chemin de fer "métropolitain", centres commerciaux et parkings souterrains), l'infrastructure de lutte contre les incendies comprend, en tunnel, des réseaux de conduites comprenant des prises d'incendie espacées sensiblement régulièrement (par exemple tous les cent mètres) et susceptibles d'être alimentées individuellement ou par groupes au moyen d'une colonne (dite "colonne sèche" parce qu'elle est normalement vide de liquide) reliant les prises en tunnel à une borne implantée en surface ; en cas d'incendie, cette borne "sèche" est reliée au moyen de tuyaux amovibles, à une borne d'incendie classique d'alimentation en eau, par les services d'intervention (sapeurs-pompiers) ; la liaison entre la borne sèche et la borne d'incendie est assurée par l'intermédiaire d'un groupe surpresseur mobile (camion surpresseur). Des dispositifs de purge, disposés aux points bas du réseau, permettent de vider celui-ci à l'issue de l'intervention ou des essais qui sont effectués périodiquement pour tester le bon fonctionnement de l'installation. Actuellement, les dispositifs de purge comportent un robinet, et l'opération de purge est réalisée par ouverture manuelle de ce robinet.

Les opérations de purge sont donc longues ou occupent plusieurs personnes spécialisées dans les interventions contre les incendies, qui sont ainsi rendues indisponibles pour d'éventuelles interventions en urgence.

On peut également penser réaliser la purge grâce à des moyens de commande électrique, mais cela implique des dispositifs onéreux, et de plus le voisinage de dispositifs électriques et de dispositifs hydrauliques est toujours préoccupant.

L'invention a pour but de remédier à cet inconvénient en créant un dispositif de purge pour installations hydrauliques, destiné à être raccordé à une canalisation, du type comportant un corps dans lequel s'étend une chambre où est logé un clapet amenant le dispositf à l'état ouvert lorsque la pression dans la chambre est inférieure à une valeur de consigne et à l'état fermé lorsque la pression est supérieure à cette valeur, dispositif caractérisé en ce que le corps comporte une chambre d'entrée, une chambre de sortie, et une chambre intermédiaire communiquant par un passage respectif avec les chambres d'entrée et de sortie, et contient un équipage mobile comprenant un premier clapet mobile dans la chambre d'entrée pour dégager et obturer le passage entre la chambre d'entrée et la chambre intermédiaire délimité par un siège pour ce premier clapet ainsi qu'un second clapet mobile dans la chambre intermédiaire pour dégager et obturer le passage entre la chambre intermédiaire et la chambre de sortie délimité par un siège pour ce second clapet lequel est lié au premier clapet pour que les dégagements et les obturations des deux passages soient pratiquement simultanés, un bipasse relie la chambre d'entrée et la chambre intermédiaire, et au moins un organe de rappel de l'équipage mobile exerce une force dans le sens de l'éloignement des clapets par rapport à leur siège pour que les clapets dégagent les passages lorsque la pression dans la chambre d'entrée descend à une valeur inférieure à la valeur de consigne.

Grâce à cette structure qui reste simple avec tous les avantages qui en résultent, on dispose d'un dispositif de purge automatique, c'est-à-dire un dispositif dont les clapets se ferment dès qu'un fluide à une pression supérieure à une valeur de consigne apparaît à son entrée, et dont les clapets s'ouvrent lorsque la pression de fluide descend sous la valeur de consigne afin que ce fluide soit alors évacué.

D'autres caractéristiques et avantages de l'invention apparaîtront de la description qui va suivre de formes de réalisation de l'invention données à titre d'exemples non limitatifs et représentées sur les dessins ci-joints dans lesquels :
- la figure 1 est une section longitudinale schématique d'une première forme de réalisation d'un dispositif selon l'invention, et
- la figure 2 est une section longitudinale schématique d'une deuxième forme de réalisation d'un dispositif selon l'invention.

Le dispositif représenté sur les figures est destiné (mais cette application n'est pas limitative) à équiper les parties les plus basses des réseaux enterrés de colonnes sèches des installations de lutte contre les incendies dans lesquelles un fluide extincteur (généralement de l'eau) est envoyé en cas de besoin ; plus précisément, il s'agit ici de colonnes sèches équipant des tunnels enterrés de quelques dizaines de mètres sous la surface du sol, de chemin de fer métropolitain, dans lesquels sont implantées, par exemple tous les cent mètres, des prises d'incendie reliées à une colonne sèche d'une dizaine de centimètres de diamètre susceptible d'être elle-même reliée, au niveau de la voirie, à une borne d'incendie locale par l'intermédiaire d'un camion-surpresseur tel que ceux appartenant aux corps de sapeurs-pompiers. Naturellement, on entend par "partie basse" tous les tronçons où le liquide est susceptible de s'accumuler et de stagner, par exemple parce qu'ils sont disposés "en siphon" entre deux tronçons inclinés ou verticaux, et pas seulement les parties les plus basses si l'on se réfère à la profondeur de leur implantation.

De manière générale, le dispositif comporte un corps 1 présentant extérieurement et intérieurement des formes générales de révolution, destiné à être raccordé à une canalisation d'une installation hydraulique, comportant intérieurement en succession le long d'un axe central commun, une première chambre 11, d'entrée, une seconde chambre 12, et une troisième chambre 13, de sortie. La chambre d'entrée 11 et la deuxième chambre 12, ou chambre intermédiaire, communiquent par un passage susceptible d'être obturé par un clapet 21 disposé dans la chambre d'entrée, délimité, du côté de la chambre d'entrée, par un siège 14 pour le clapet, lequel siège est constitué par une face d'un épaulement de transition entre la chambre d'entrée et la chambre intermédiaire, le diamètre de la chambre d'entrée étant, au moins dans cette région, supérieur à celui de la chambre intermédiaire. De même, la chambre intermédiaire 12 et la chambre de sortie 13 communiquent par un passage susceptible d'être obturé par un deuxième clapet 22 disposé dans la chambre intermédiaire, délimité, du côté de la chambre intermédiaire, par un siège 15 pour ce clapet, lequel siège est constitué par une face d'un épaulement de transition entre la chambre intermédiaire et la chambre de sortie, le diamètre de la chambre intermédiaire étant, au moins dans cette région, supérieur à celui de la chambre de sortie. Par suite de cette géométrie, la surface utile du premier clapet 21 est supérieure à celle du deuxième clapet 22. Les deux clapets 21, 22 sont liés l'un à l'autre de manière à constituer un unique équipage mobile 2, mobile uniquement en translation longitudinale, dont les deux clapets, l'un dans la chambre d'entrée 11 et l'autre dans la chambre intermédiaire 12, obturent et dégagent aussi simultanément que possible leur passage respectif, sous l'action de la pression du fluide dans la canalisation. Une dérivation 3, connue dans la technique sous le nom de bipasse, relie la chambre d'entrée 11 et la chambre intermédiaire 12 de telle sorte que du fluide de la canalisation soit transmis dans la chambre intermédiaire, pour exercer sur les clapets une action qui sera précisée dans la suite de l'exposé. Afin de fixer la valeur de la pression dans la chambre d'entrée à partir de laquelle les clapets amènent le dispositif à l'état ouvert ou à l'état fermé selon leur état d'origine (valeur de consigne), l'équipage mobile 2 est soumis à l'action d'un organe de rappel 4 dont la force de rappel s'exerce sur lui dans le sens de l'éloignement des clapets par rapport à leur siège, lorsque les clapets sont en appui sur leur siège sous l'action de la pression du fluide.

En vue de faciliter son insertion dans l'installation, le dispositif comporte des régions filetées : ici, la face interne de la paroi latérale de la chambre d'entrée 11 présente un filetage sur une partie de sa longueur, dans la région où la chambre débouche à l'extérieur, et, dans la chambre de sortie, débouche un canal 16 d'évacuation du fluide, débouchant également à l'extérieur et présentant également une paroi filetée.

L'équipage mobile 2 comporte, en plus des deux clapets, une tige 23 de liaison de ceux-ci s'étendant de l'un à l'autre, et deux doigts de guidage 24, 25 s'étendant axialement l'un depuis le premier clapet 21 dans la chambre d'entrée 11 et l'autre depuis le deuxième clapet 22 dans la chambre de sortie 13, fixés de telle sorte que l'ensemble 2 se déplace d'un seul bloc ; avantageusement, cet ensemble est en une seule pièce. Le guidage de l'équipage mobile 2 dans son mouvement de translation longitudinale est réalisé par ajustement "glissant" du doigt de guidage 24 de la chambre d'entrée dans un perçage axial formant palier traversant de part en part une cloison 17 s'étendant transversalement dans la chambre d'entrée 11 et percée également de part en part d'ouvertures d'échange de fluide, et du doigt de guidage 25 de la chambre tubulaire de sortie 13 dans une région formant palier située au-delà du canal 16 d'évacuation en allant depuis le deuxième clapet 22 vers l'extrémité libre du doigt de guidage 25.

La tige de liaison 23 présente extérieurement des surfaces tronconiques se succédant entre les deux clapets, chaque tronc de cône ayant son grand diamètre plus proche de la chambre de sortie 13 et son petit diamètre plus proche de la chambre d'entrée 11 ; le petit diamètre de chaque tronc de cône est relié au grand diamètre du tronc de cône immédiatement voisin par un épaulement, la grande base du tronc de cône le plus proche de la chambre de sortie constituant la portée du clapet 22 de la chambre intermédiaire 12, et le tronc de cône le plus proche de la chambre d'entrée étant relié au clapet 21 de celui-ci par sa petite base. Cette forme tronconique facilite l'ouverture du dispositif de purge lorsque la pression dans la chambre d'entrée diminue.

Le corps 1 est en plusieurs pièces pour permettre son usinage et le montage de l'équipage mobile ; notamment, la région qui entoure la chambre d'entrée 11 est en deux pièces 1A, 1B dont l'une renferme la cloison transversale 17 comportant un perçage axial de guidage de l'équipage mobile 2.

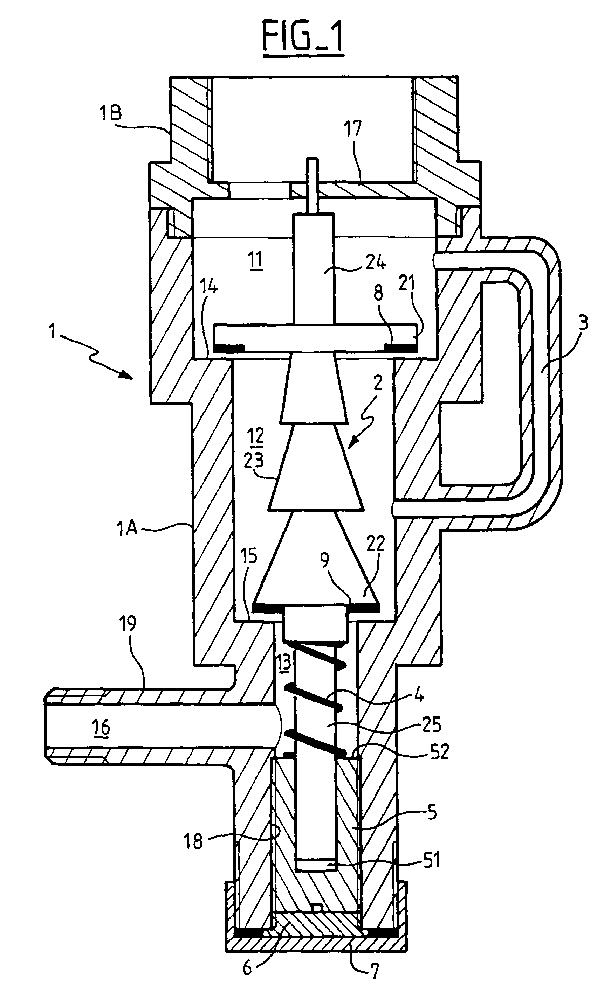

Dans la forme de réalisation de la figure 1, le corps 1 comporte une pièce principale 1A, et une pièce d'entrée 1B dans laquelle s'étend la partie de la chambre d'entrée 11 qui est située, par rapport à la cloison transversale 17, du côté de la canalisation à purger, cette cloison transversale, et un tronçon de faible longueur de la partie de la chambre qui est située du côté de la chambre intermédiaire 12 ; ces deux parties de la chambre 11 présentent des formes générales cylindriques, de plus petit diamètre pour la partie côté canalisation. Les ouvertures d'échange de fluide de la cloison transversale se succèdent le long d'une circonférence centrée sur l'axe longitudinal du dispositif, angulairement régulièrement ; on a par exemple trois ouvertures réparties à 120 degrés l'une de l'autre. La pièce d'entrée 1B est vissée dans la pièce principale 1A, la paroi latérale de la pièce d'entrée présentant, sur une partie de sa longueur, un filetage extérieur, et celle de la pièce principale présentant, dans la région de son extrémité destinée à recevoir la pièce d'entrée, un filetage interne de mêmes caractéristiques ; pour des raison d'étanchéïté, un joint (non représenté) peut être interposé entre les deux pièces 1A, 1B, et les parois latérales des deux pièces peuvent être épaulées.

La pièce principale 1A du corps renferme donc la plus grande partie de la chambre d'entrée 11, la chambre intermédiaire 12, et la chambre de sortie 13 ; à l'opposé de la chambre intermédiaire, la chambre de sortie se prolonge par un alésage fileté 18 débouchant à l'extérieur du corps, dans lequel est vissée une vis de réglage 5 de la course de l'équipage mobile 2. Cette vis de réglage 5 (du type sans tête, et comportant seulement, du côté opposé à la chambre intermédiaire, une fente pour l'insertion de la lame d'un tournevis) présente elle-même, du côté de la chambre intermédiaire, un alésage borgne 51 formant palier dans lequel le doigt de guidage 25 de la chambre de sortie est ajusté "glissant". La vis de réglage 5 étant en retrait dans l'alésage fileté 18 du corps principal, une capsule vissante 6 est également vissée dans cet alésage 18 et obture celui-ci. La paroi latérale de cette région de la pièce principale 1A comporte également un filetage externe sur lequel est vissé un bouchon 7 comportant un filetage interne correspondant, le fond du bouchon 7 étant en appui contre la capsule vissante 6 et contre un joint d'étanchéïté entourant celle-ci et interposé entre ce fond et la face d'extrémité de la pièce principale.

Le canal d'évacuation 16 du fluide s'étend dans un appendice tubulaire 19 de la pièce principale s'étendant radialement vers l'extérieur de celle-ci ; cet appendice tubulaire est fileté extérieurement en vue de son raccordement à un tuyau d'évacuation.

Le bipasse 3 reliant la chambre d'entrée et la chambre intérmédiaire est constitué dans une tubulure s'étendant extérieurement au corps et qui est fixée à celui-ci par exemple par des régions d'extrémité coudées soudées à la pièce principale du corps, comportant un conduit central débouchant d'un côté dans la chambre d'entrée 11 à un niveau toujours plus proche de l'entrée que le premier clapet 21 quel que soit l'écartement de celui-ci par rapport à son siège 14, et de l'autre côté dans la région centrale de la chambre intermédiaire 12.

Comme on l'a vu, l'équipage mobile 2 est constitué, sous une forme générale de révolution, de deux clapets 21, 22, reliés par une tige de liaison 23 et portant chacun, du côté opposé à la tige de liaison, un doigt de guidage 24, 25. Le premier clapet 21, mobile vers le siège 14 du passage entre la chambre d'entrée 11 et la chambre intermédiaire 12 et en provenance de celui-ci, a la forme d'un disque, et sa portée est constituée par une garniture annulaire 8 destinée à venir en appui contre le siège. Le deuxième clapet 22 est constitué par la région de la grande base du troisième tronc de cône en partant du premier clapet, le premier tronc de cône étant relié par sa petite base à la face du premier clapet qui est tournée vers la chambre intermédiaire. Les petits diamètres des trois troncs de cônes constituant la tige de liaison 23 sont égaux, mais leurs grands diamètres respectifs vont en croissant du premier au troisième tronc de cône, et ainsi le grand diamètre du troisième tronc de cône est compris entre le diamètre de la chambre intermédiaire 12 et celui de la chambre de sortie 13 dans la région du passage entre ces deux chambres. La portée du deuxième clapet est également constituée par une garniture annulaire 9. Le doigt de guidage 24 porté par le premier clapet 21 est constitué par deux régions cylindriques reliées par un épaulement, celle de plus grand diamètre étant reliée au clapet 21 et celle de plus petit diamètre traversant le perçage axial formant palier, de la cloison transversale de la chambre d'entrée 11 ; la distance de la cloison transversale de la chambre d'entrée à l'épaulement du doigt de guidage lorsque l'équipage mobile 2 est à son emplacement de fermeture du dispositif définit la course maximale de l'équipage mobile quel que soit le réglage déterminé au moyen de la vis de réglage. Le doigt de guidage 25 porté par le deuxième clapet 22 est également constitué de deux régions cylindriques reliées par un épaulement, celle de plus grand diamètre étant reliée au clapet et celle de plus petit diamètre pénétrant dans l'alésage borgne 51 formant palier, de la vis de réglage 5. L'organe de rappel 4 de l'équipage mobile 2 tendant à écarter les clapets 21, 22 de leur siège 14, 15 est constitué par un ressort hélicoïdal entourant le doigt de guidage 25 de la chambre de sortie 13, et en appui par l'une de ses extrémités contre l'épaulement et par l'extrémité opposée contre la face d'extrémité 52 de la vis de réglage 5 dans laquelle débouche l'alésage borgne 51 de celle-ci ; ce ressort 4 est naturellement comprimé lorsque le dispositif est à l'état fermé (clapets contre leur siège).

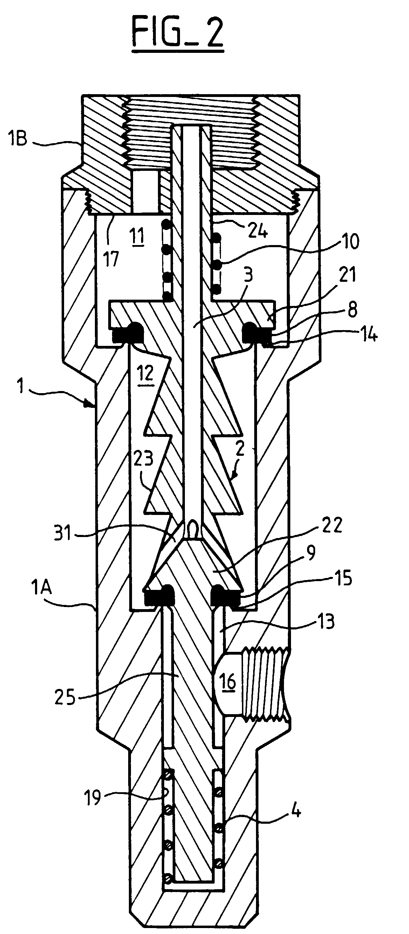

Dans la forme de réalisation de la figure 2, le corps 1 comporte également une pièce principale lA et une pièce d'entrée 1B dans laquelle s'étend la partie de la chambre d'entrée 11 qui est située, par rapport à la cloison transversale 17, du côté de la canalisation à purger. La pièce d'entrée 1B est approximativement similaire à celle de la forme de réalisation de la figure 1, à ceci près que la cloison transversale 17 s'étend à l'extrémité de la pièce d'entrée qui est en regard du siège 14 de la chambre d'entrée pour le premier clapet 21 ; ainsi, la totalité de la partie de la chambre d'entrée 11 qui est située du côté de la chambre intermédiaire 12 est délimitée par la paroi latérale de la pièce principale 1A.

Le pièce principale 1A du corps 1 renferme donc la plus grande partie de la chambre d'entrée 11, la chambre intermédiaire 12, et la chambre de sortie 13 ; à l'opposé de la chambre intermédiaire, la chambre de sortie de prolonge par un alésage borgne 19 lisse formant palier dans lequel est ajustée "glissant" une collerette du doigt de guidage 25 porté par le deuxième clapet 22, la chambre de sortie étant donc bornée par cette collerette qui coulisse avec ce doigt de guidage et l'ensemble de l'équipage mobile.

Le canal d'évacuation 16 s'étend radialement dans la pièce principale 1A et sa paroi comporte un filetage interne de raccordement à un tuyau d'évacuation.

Le bipasse 3 reliant la chambre d'entrée 11 et la chambre intermédiaire 12 est constitué, dans l'équipage mobile 2, par un canal axial percé dans celui-ci depuis son extrémité logée dans la chambre d'entrée jusqu'au second clapet 22 en traversant le premier clapet 21, ce canal étant relié à la chambre intermédiaire 12 par des ramifications 31 rectilignes réparties angulairement régulièrement dans l'équipage mobile. Ces ramifications 31 peuvent être par exemple au nombre de quatre réparties à quatre vingt dix degrés l'une de l'autre, leurs axes longitudinaux constituant les génératrices d'un cône dont l'angle au sommet est d'une soixantaine de degrés.

L'équipage mobile 2 est également constitué, sous une forme générale de révolution, de deux clapets 21, 22 reliés par une tige de liaison 23 et portant chacun, du côté opposé à la tige de liaison, un doigt de guidage 24, 25. Le premier clapet 21 présente aussi, du côté de l'entrée de la chambre d'entrée 11, une face plane, et de l'autre côté, une garniture annulaire 8 ; cependant, cet autre côté présente une forme tronconique très aplatie (angle au sommet de l'ordre de cent cinquante degrés), avec un grand diamètre inférieur à celui du passage entre la chambre d'entrée et la chambre intermédiaire et une petite base reliée à celle du premier des troncs de cônes constituant la tige de liaison 23, la région du premier clapet 21 adjacente à la grande base du tronc de cône et s'étendant en direction de la face plane, comportant une gorge pour le logement de la région intérieure de la garniture annulaire 8. Les troncs de cônes de la tige de liaison 23 sont également au nombre de trois, et, cette fois, égaux, la région de la grande base du troisième constituant également le deuxième clapet 22 et contenant les ramifications 31 du bipasse. Le deuxième clapet 22 présente, comme le premier, une forme tronconique très aplatie, du côté de son siège, et une gorge pour le logement de sa garniture annulaire 9, le grand diamètre de ce tronc de cône étant inférieur à celui de la chambre de sortie 13, et le petit diamètre étant relié au doigt de guidage correspondant 25. Le doigt de guidage 24 porté par le premier clapet 21 est cylindrique et entouré par un ressort hélicoïdal 10 de plus faible longueur que la distance séparant la cloison transversale 17 de la chambre d'entrée 11, de la face annulaire plane du premier clapet 21 lorsque celui-ci est en appui contre son siège 14 ; la différence entre la distance séparant alors le premier clapet 21 et la cloison transversale 17, et la longueur du ressort 10, constitue la course que l'équipage mobile 2 peut accomplir librement sans être soumis à un effort du ressort 10 tendant à le repousser en direction des sièges 14, 15 des clapets 21, 22, sièges constitués ici par des protubérances annulaires s'étendant en surélévation sur les faces des chambres d'entrée et intermédiaire. Le doigt de guidage 25 porté par le deuxième clapet 22 est également cylindrique à l'exception de la collerette déjà mentionnée ; la région de ce doigt 25 comprise entre la collerette et l'extrémité de l'alésage borgne 19 de la pièce principale 1A du corps 1, vide de liquide par suite de l'ajustement de la collerette dans l'alésage, contient un ressort hélicoïdal taré 4 en appui d'un côté contre cette extrémité de l'alésage et du côté opposé contre la collerette ; le ressort 4 est naturellement comprimé lorsque le dispositif est à l'état fermé (clapets contre leur siège).

En variante, le dispositif de la figure 2 peut comporter des organes de réglage complémentaires similaires à ceux du dispositif de la figure 1. A cet effet, la chambre de sortie telle que décrite au regard de la figure 2 se prolonge par un alésage non pas borgne mais qui débouche à l'extrémité du corps qui est proche de la chambre de sortie, comme cela est le cas pour l'alésage fileté 18 du dispositif de la figure 1 ; cependant, comme dans le cas de la figure 2, la collerette du doigt de guidage 25 porté par le deuxième clapet est ajustée "glissant" dans une partie lisse de l'alésage, et la région de ce doigt comprise entre la collerette et son extrémité libre est entourée d'un ressort hélicoïdal taré disposé dans un espace annulaire vide de liquide et à paroi lisse ; en revanche, la région d'extrémité de l'alésage qui débouche à l'extérieur comporte un filetage interne dans lequel est vissé le corps d'une vis de réglage, corps de vis dont l'extrémité du côté de la chambre de sortie sert d'appui au ressort taré ; comme l'étanchéité est assurée au niveau de la collerette, la tête de la vis peut être extérieure à la pièce principale 1A (contrairement au cas de la figure 1), et il peut s'agir par exemple d'une tête à section carrée susceptible d'être actionnée par un "carré" femelle ; un écrou de blocage est vissé autour du corps de la vis, et serré contre la face d'extrémité du corps dans laquelle débouche la partie de l'alésage prolongeant la chambre de sortie, pour fixer le réglage.

Dans les exemples décrits ci-dessus, le corps 1 (pièce d'entrée 1B, pièce principale 1A, et éventuellement capsule vissante 6 et bouchon 7) ainsi que l'équipage mobile 2 sont en alliage de cuivre (bronze ou laiton), et les ressort 4, 10 sont en acier inoxydable ainsi que la vis de réglage 5 de la première forme de réalisation ; les garnitures 8, 9 peuvent être métalliques ou en matériau synthétique.

Lorsque le dispositif est relié à la canalisation à purger (au moyen d'un tube vissé), toute arrivée de fluide alimente la chambre d'entrée 11, ce qui provoque, si la pression est supérieure à la valeur de consigne, la fermeture des clapets 21, 22. Grâce au bipasse 3, le fluide emplit également la chambre intermédiaire 12, avec un certain délai, progressivement à la même pression. Lorsque la pression baisse dans la chambre d'entrée, en fin d'intervention ou en fin d'essai périodique, à une valeur inférieure à la valeur de consigne déterminée par les caractéristiques des ressorts 4, 10 et éventuellement un réglage complémentaire, les clapets 21, 22 s'ouvrent d'autant plus facilement que la pression dans la chambre intermédiaire 12 ne baisse pas aussi rapidement que celle dans la chambre d'entrée 11 ; il résulte de l'ouverture des clapets que le fluide résiduel peut transiter vers la chambre de sortie 13 et ainsi être évacué du dispositif ; comme les dispositifs sont ouverts au repos, l'air de l'installation est chassé automatiquement au moment de l'introduction du fluide sous pression.

Grâce à cette structure, le dispositif peut être disposé dans n'importe quelle position sans que cela nuise à son fonctionnement ; de plus cette structure, qui admet aisément une pression d'épreuve supérieure à 25 bars et une pression de service de 2 à 15 bars, absorbe les coups de bélier. Enfin, le dispositif peut être utilisé dans une large gamme de profondeurs (donc de colonnes d'eau), en jouant sur les caractéristiques mécaniques des ressorts utilisés.

Bien entendu, l'invention n'est pas limitée aux formes de réalisation ci-dessus décrites et représentées, et on pourra en prévoir d'autres sans sortir de son cadre.

## Revendications

1. Dispositif de purge pour installations hydrauliques, destiné à être raccordé à une canalisation, du type comportant un corps (1) dans lequel s'étend une chambre (11) où est logé un clapet (21) amenant le dispositf à l'état ouvert lorsque la pression dans la chambre est inférieure à une valeur de consigne et à l'état fermé lorsque la pression est supérieure à cette valeur, dispositif caractérisé en ce que le corps (1) comporte une chambre d'entrée (11), une chambre de sortie (13), et une chambre intermédiaire (12) communiquant par un passage respectif avec les chambres d'entrée et de sortie, et contient un équipage mobile (2) comprenant un premier clapet (21) mobile dans la chambre d'entrée pour dégager et obturer le passage entre la chambre d'entrée et la chambre intermédiaire délimité par un siège (14) pour ce premier clapet ainsi qu'un second clapet (22) mobile dans la chambre intermédiaire pour dégager et obturer le passage entre la chambre intermédiaire (12) et la chambre de sortie (13) délimité par un siège (15) pour ce second clapet (22) lequel est lié au premier clapet pour que les dégagements et les obturations des deux passages soient pratiquement simultanés, un bipasse (3) relie la chambre d'entrée (11) et la chambre intermédiaire (12), et au moins un organe de rappel (4) de l'équipage mobile (2) exerce une force dans le sens de l'éloignement des clapets par rapport à leur siège pour que les clapets dégagent les passages lorsque la pression dans la chambre d'entrée descend à une valeur inférieure à la valeur de consigne.

2. Dispositif selon la revendication 1, caractérisé en ce que l'équipage mobile (2) comprend une tige de liaison (23) des clapets (21, 22) présentant extérieurement, entre les clapets, des surfaces tronconiques se succédant avec leur grand diamètre plus proche du second clapet (22) que du premier (21).

3. Dispositif selon la revendication 1, caractérisé en ce qu'il comporte au moins un organe de réglage (5, 10) de la course de l'équipage mobile (2).

4. Dispositif selon la revendication 3, caractérisé en ce qu'il comporte, en tant qu'organe de réglage de la course, un organe fileté (5) vissé dans le corps (1), dans lequel est logée une extrémité de l'équipage mobile (2).

5. Dispositif selon la revendication 3, caractérisé en ce qu'il comporte, en tant qu'organe de réglage de la course, un ressort hélicoïdal (10) entourant une région de l'équipage mobile (2) à proximité d'une extrémité de celui-ci guidée dans le corps (1).

6. Dispositif selon la revendication 1, caractérisé en ce que les clapets (21, 22) présentent une forme de révolution, et la surface utile du premier clapet (21) est supérieure à celle du second clapet (22).

7. Dispositif selon la revendication 1, caractérisé en ce que le bipasse (3) est constitué dans une tubulure (3) s'étendant extérieurement aux chambres d'entrée (11) et intermédiaire (12) et débouchant dans celles-ci.

8. Dispositif selon la revendication 1, caractérisé en ce que le bipasse (3) est constitué dans une partie de l'équipage mobile (2), lequel est percé d'un canal s'étendant axialement depuis une extrémité de l'équipage mobile logée dans la chambre d'entrée (11) jusqu'au second clapet (22) en traversant le premier clapet (21), ce canal axial étant relié à la chambre intermédiaire (12) par des ramifications (31) réparties angulairement régulièrement dans l'équipage mobile.

9. Dispositif selon la revendication 1, caractérisé en ce que l'équipage mobile (2) est guidé à proximité de ses deux extrémités pour être mobile uniquement longitudinalement, la chambre d'entrée (11) comportant une cloison transversale (17) munie d'ouvertures d'échange de fluide entre les deux parties de la chambre s'étendant de part et d'autre de la cloison et d'un perçage dans lequel une première région d'extrémité de l'équipage mobile (2) est ajustée "glissant", et la chambre de sortie (13) comportant un canal de forme tubulaire délimité extérieurement par la face interne de la paroi du corps (1) et intérieurement par l'équipage mobile (2), le guidage de la seconde région d'extrémité de l'équipage mobile (2) se situant au-delà de ce canal tubulaire (16) à l'opposé du second clapet (22).
